# DEMANDE DE BREVET EUROPEEN

(11) **EP 2 777 807 A1**
(43) Date de publication de la demande: **17.09.2014**
(21) Numéro de dépôt: 13164928.7
(22) Date de dépôt: 23.04.2013
(51) Int. Cl.: B01J 2/10

(54) **Dispositif et procédé pour le conditionnement en granules d'une composition de matière**

(30) Priorité: 14.03.2013 EP 13159271
(71) Demandeur: Bottura, Francesco, 1260 Nyon (CH)
(72) Inventeur: Bottura, Francesco, 1260 Nyon (CH)
(74) Mandataire: Bugnion Genève

(57) **Abrégé**

La présente invention se rapporte d'une part,
- à un dispositif pour le conditionnement sous forme de granules d'une composition formulée à partir de matières premières organiques et minérales, caractérisé en ce qu'il comprend une cuve rotative à paroi hyperbolique ou exponentielle recevant les matières premières en vrac en partie supérieure, au moins un jeu de lames assurant le mélange et le broyage desdites matières à l'intérieur de la cuve et une gorge hélicoïdale portée par la paroi de ladite cuve et assurant, conjointement, l'acheminement par centrifugation et le guidage du mélange de la partie basse de la cuve vers sa partie haute et l'agglomération progressive desdites matières en granules et, d'autre part,
- à un procédé de conditionnement de ladite composition au moyen dudit dispositif.

## Description

La présente invention concerne un dispositif pour le conditionnement en granules d'une composition de matière ainsi qu'un procédé de conditionnement d'une telle composition.

La présente invention se rapporte plus particulièrement à un dispositif et à un procédé destinés à conditionner sous forme de particules solides, des matières premières organiques ou un ensemble de matières premières organiques et minérales entrant dans la formulation d'un fondant de déneigement et en particulier d'un fondant de déneigement biodégradable.

Le document FR 1 158 069 décrit une composition de fondant destiné au déneigement et/ou à la décongélation du sol et, plus particulièrement, de la voirie et des voies de circulation routière. Cette composition est obtenue par broyage et mélange de différentes matières organiques et/ou minérales qui sont ensuite agglomérées pour se présenter, de préférence, sous la forme compacte finale de granules prêts à l'emploi.

Il existe déjà des dispositifs permettant d'effectuer des opérations de préparation et de conditionnement de compositions chimiques de ce type. Cependant, ces dispositifs sont généralement constitués d'une série de moyens mécaniques et hydrauliques indépendants qui sont reliés en chaîne de façon fonctionnelle et qui effectuent chacun une opération isolée et bien déterminée du procédé de formulation.

Les opérations successives comprennent broyage, homogénéisation et mélange de matières d'origine organique et/ou de matières d'origine minérale et d'un liant, de préférence hydraulique et d'origine naturelle. Le mélange obtenu est ensuite soumis à une étape d'agglomération et de compactage puis est soumis à une étape de séchage.

Cette division des opérations, outre les difficultés de mise en oeuvre sur plusieurs équipements, est d'autant plus pénalisante que certaines compositions dont celle du fondant ont vocation à être préparées sur le lieu même de leur utilisation, par exemple, par épandage pour éviter des coûts logistiques (transport,...) importants.

Or les installations existantes ne sont pas adaptées à de telles délocalisations qui impliquent nécessairement une grande mobilité et donc une compacité et une autonomie accrues.

La présente invention a pour but de résoudre ces problèmes techniques de manière satisfaisante et efficace en proposant une solution permettant de réaliser toutes les phases de la formulation et du conditionnement de ces compositions au moyen d'un seul et unique dispositif compact.

Ce but est atteint selon l'invention au moyen d'un dispositif de conditionnement, **caractérisé en ce qu'il** comprend une cuve rotative à paroi intérieure conformée en entonnoir avec une partie inférieure en pente raide et une partie supérieure évasée, recevant les matières premières en vrac en partie supérieure, au moins un jeu de lames assurant le broyage et le mélange desdites matières à l'intérieur de la cuve et au moins une gorge hélicoïdale portée par ladite paroi intérieure de ladite cuve et assurant, conjointement, l'acheminement par centrifugation et le guidage du mélange de la partie inférieure de la cuve vers sa partie supérieure et l'agglomération progressive desdites matières en granules.

Selon un mode d'exécution, la dite paroi intérieure présente une courbure continûment variable et présente une forme choisie parmi les hyperboloïdes de révolution et les pavillons exponentiels.

Selon une caractéristique avantageuse, le dispositif comprend, en périphérie de sa partie supérieure, un conduit d'extraction desdites matières agglomérées en granules.

Selon une autre caractéristique, l'organe d'extraction comprend une buse de soufflage, dans la cuve, d'un flux d'air destiné au séchage desdites granules.

De préférence, ladite buse est associée à des éléments de chauffage du flux d'air soufflé.

Selon une variante avantageuse, le jeu de lames est supporté par un arbre rotatif disposé selon l'axe central de la cuve.

Selon une autre caractéristique, le dispositif comprend, en partie supérieure, un bras de raclage de la paroi interne de la cuve.

Selon une autre variante, le dispositif comprend deux jeux de lames portés respectivement par deux arbres coaxiaux indépendants qui sont mus en rotation de sens contraires.

Selon encore une autre caractéristique, le dispositif comprend un embout d'injection, dans ladite cuve, d'un constituant liquide.

En outre, le dispositif comprend une trémie supérieure d'alimentation en matières premières.

Le cas échéant, le dispositif comprend un organe de prélèvement et de traitement des gaz d'échappement de la cuve.

Selon une variante spécifique, le dispositif comprend un capot épousant, sur son pourtour, le profil du rebord supérieur de la cuve en ménageant un espace intercalaire formant conduit d'extraction des granules et s'engageant, dans sa partie centrale, en saillie à l'intérieur de ladite cuve.

Selon un mode d'exécution, le dispositif comprend des moyens de pivotement permettant de faire varier l'angle d'inclinaison de l'axe de rotation de la cuve par rapport à la verticale.

Un autre objet de l'invention est un procédé de conditionnement d'une composition de fondant en granules au moyen du dispositif défini ci-dessus ;

En particulier un objet de l'invention est un procédé tel que ci-dessus où ladite composition de fondant comprend une partie majoritaire de matières premières biodégradables d'origine végétale et une partie minoritaire de sels choisis parmi les sels organiques et les sels minéraux de métaux alcalins et/ou alcalino-terreux, et en particulier une composition comprenant 71 - 90 % de biomasse et 10 - 29 % desdits sels. La composition peut inclure 4 - 10 % de liant.

Un autre objet de l'invention est un fondant de déneigement obtenu par un procédé tel que ci-dessus.

Le dispositif de l'invention est destiné à être utilisé, de préférence, de façon mobile en étant embarqué dans un véhicule utilitaire qui se déplace sur le terrain ou le chantier de déneigement à traiter.

Toutefois, le dispositif de l'invention peut tout aussi bien être utilisé dans une installation industrielle fixe, par exemple, en augmentant sensiblement ses dimensions et en l'associant, en parallèle, à des dispositifs identiques ou analogues pour assurer une production de masse.

L'invention sera mieux comprise à la lecture de la description qui va suivre, accompagnée des dessins sur lesquels ;
La figure 1 représente une vue schématique partielle en coupe d'un mode de réalisation de l'invention.
La figure 2 représente une vue schématique partielle en coupe d'une variante de réalisation de l'invention.
La figure 3 représente une vue schématique partielle en coupe d'une autre variante de réalisation de l'invention.

Le dispositif représenté sur les figures est destiné à la mise en oeuvre d'un procédé de conditionnement d'une composition chimique biodégradable utilisée dans un fondant de déneigement.
De telles compositions qui sont décrites, notamment, dans le FR 1 158 069, permettent, en association avec de l'eau à l'état de glace/neige, d'abaisser sa température de congélation.

Les matières organiques sont, de préférence, végétales et sont extraites, par tout procédé connu, d'espèces protéo-oléagineuses (tournesol, colza, pépins/pulpes de raisins,...) ou de déchets de céréales (blé, maïs, miscanthus). Les matières minérales sont constituées de sels (par ex. chlorures de sodium, calcium, potassium, magnésium,...) sous forme solide (grains) ou visqueuse (saumure) tandis que le liant est un sous-produit de l'agriculture (vinasses, mélasses,...).

Les particules issues de ces étapes qui ont typiquement une granulométrie comprise entre 0,5 et 5 mm, sont ensuite séchées, au moins partiellement, et conditionnées sous forme de granules dont le taux d'humidité est inférieur à 10%.
Ces granules sont utilisées soit sous forme indépendante en épandage, soit en étant associées ou incorporées dans des formulations plus complexes en tant qu'agent actif, retardateur de congélation ou accélérateur/catalyseur de décongélation.

Selon l'invention, le dispositif de conditionnement des compositions précitées comprend une cuve 1 à parois hyperboliques qui est mise en rotation à grande vitesse par un moteur M.
La capacité de la cuve 1 est généralement comprise entre 300 et 2000 litres à l'échelon industriel. La vitesse de rotation de la cuve, choisie en fonction des matières premières, est de l'ordre de quelques mètres/seconde, au niveau du bord de la cuve 0,5 et 15 m/sec.
Le rapport entre le diamètre minimal de la cuve dans sa partie inférieure et le diamètre maximal de la partie supérieure de l'entonnoir est compris entre 1:7 et 1:20 et est de préférence de l'ordre de 1:12
Le rapport entre la hauteur de la cuve et le diamètre maximal de la partie supérieure de l'entonnoir est compris entre 0,7:1 et 1:1 et est de préférence de l'ordre de 0,85:1.
L'inclinaison maximale de la paroi dans la partie inférieure est de l'ordre de 75° - 85° (angle d'ouverture du cône 10°- 30°). L'inclinaison minimale de la paroi dans la partie supérieure est de l'ordre de 5° - 15° (angle d'ouverture du cône 150°- 170°).

Pour faciliter la montée des produits le long de la paroi intérieure de la cuve et leur extraction, ou encore pour faire varier la durée de résidence des matières dans la cuve, l'axe de rotation de la cuve est avantageusement incliné de 15° à 30° par rapport à la verticale. Ceci peut être réalisé en montant la cuve pivotante dans un bâti (non montré dans les figures).

La cuve 1 présente ainsi la forme générale d'une vasque à ouverture supérieure évasée dont les flancs convexes ont une courbure comprise entre 165°et 178°(presque horizontal à l'ouverture supérieure).
Le fond de la cuve 1 a, quant à lui, un diamètre d'environ 5-20% du diamètre supérieur.

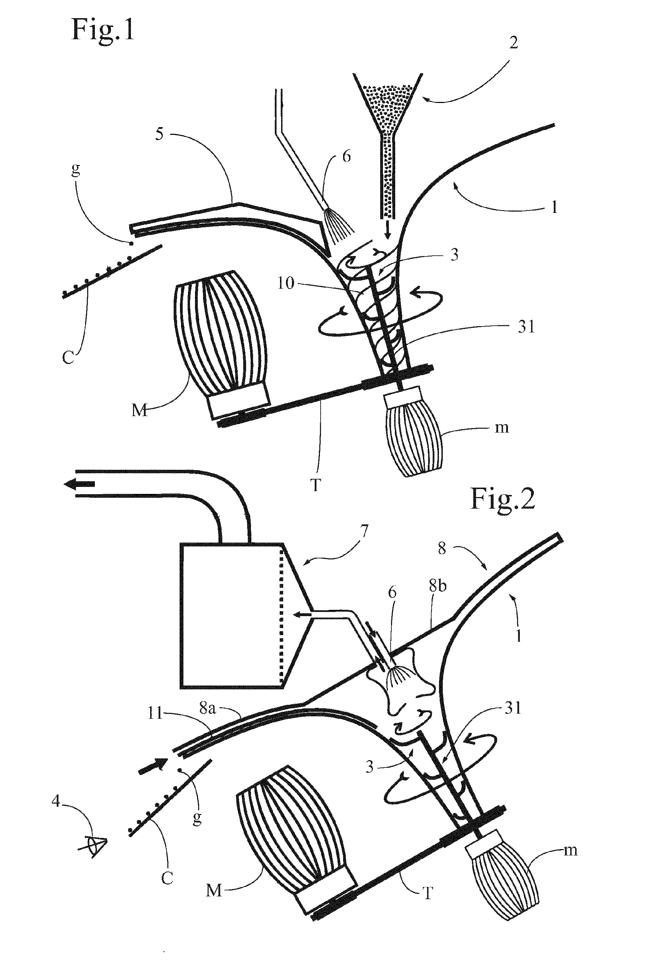

La cuve 1 est en prise directe avec l'arbre du moteur M ou entraînée en rotation via une courroie de transmission T, comme illustré par la figure 1.

La cuve 1 reçoit les matières premières organiques et minérales en partie supérieure via au moins une trémie d'alimentation 2.
Les matières d'origine organique et celles d'origine minérale sont introduites en vrac dans la cuve via des trémies distinctes, en particulier, si les matières organiques sont solides alors que les matières minérales sont en phase liquide ou visqueuse.
Toutefois, il est aussi possible de prévoir que les matières organiques et minérales sont toutes mélangées en amont de la trémie 2.

La cuve 1 est équipée d'au moins un jeu de lames 3 assurant le broyage, le mélange et l'homogénéisation des matières à l'intérieur de la cuve.
Ce jeu de lames est supporté par un arbre rotatif 31 disposé selon l'axe central de la cuve 1 et entraîné par un moteur unique m (figure 1).

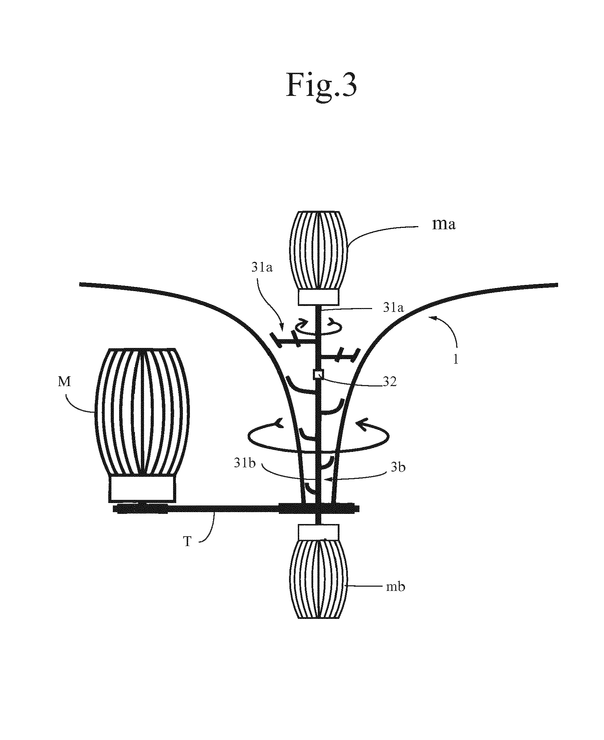

De préférence, afin d'améliorer le mélange, la cuve sera pourvue de deux jeux de lames 3a, 3b portés respectivement par deux arbres coaxiaux indépendants 31a, 31b.
Dans ces conditions, chacun des arbres 31a, 31b est mû en rotation par son propre moteur ma, mb et les deux arbres sont couplés de façon à tourner dans des sens contraires via un cardan 32 (figure 3), éventuellement associé à un différentiel, si des vitesses de rotation différentes s'avéraient utiles.

Les lames sont configurées en peigne ou en râteau en étant solidaires de branches transversales raccordées à l'arbre 31 de façon à malaxer et brasser le mélange en profondeur. Le profil et les dimensions des lames sont adaptés, selon les différentes zones verticales de la cuve, aux propriétés rhéologiques du mélange (densité, viscosité,..) au niveau de chaque zone afin de parfaire son homogénéisation.

La cuve 1 comporte, en outre, une gorge hélicoïdale 10 portée par la paroi interne de ladite cuve (figure 1) et assurant, conjointement, l'acheminement par effet de centrifugation et le guidage du mélange de la partie basse de la cuve vers sa partie haute à la manière d'une rampe et l'agglomération progressive, le long de cette rampe, des différentes matières en granules homogènes g.
Le pas et l'inclinaison de la gorge hélicoïdale 10 seront déterminés en fonction de la position des lames 3 pour éviter toute interaction préjudiciable.

La cuve 1 comprend, en périphérie de sa partie haute, un conduit 11 pour l'extraction des granules. La rotation de la cuve combinée à l'action de guidage de la gorge 10 provoque un mouvement ascendant du mélange qui se divise au fur et à mesure de son ascension, par agglomération, en formant des particules individualisées.

Ces particules se retrouvent ainsi, sous l'action de la force centrifuge, déplacées à la périphérie supérieure de la cuve où elles sont extraites via le conduit 11 et transférées vers un lieu de stockage au moyen d'un convoyeur C (figures 1 et 2).

Le conduit 11 est avantageusement associé à une buse 4 de soufflage d'un flux d'air (figure 2) permettant le séchage des granules g lors de la phase finale de leur extraction.

De préférence, la buse 4 est associée à des éléments de chauffage (non représentés) du flux d'air soufflé pour améliorer la vitesse de séchage.

Afin de décoller les quelques granules qui resteraient attachés à la paroi de la cuve 1, cette dernière est pourvue, en partie supérieure, d'un bras 5 de raclage de la paroi interne de la cuve. Ce bras 5 qui est fixe épouse sensiblement le profil du rebord interne de la cuve rotative 1.

Le dispositif comprend un embout d'injection 6 dans la cuve 1 d'un constituant liquide ou semi-liquide tel que le liant d'origine naturelle utilisé pour la formulation d'une composition chimique biodégradable.

Un organe 7 de prélèvement et de traitement des gaz d'échappement issus du mélange des matières organiques et minérales est également monté sur la cuve pour satisfaire les normes environnementales. Cet organe 7 est, le cas échéant, pourvu d'un moyen d'aspiration pour faciliter le débit de prélèvement des gaz à traiter.

Selon une variante, il est prévu de poser sur la cuve 1 un capot 8 (figure 2) épousant, sur son pourtour 8a, le profil du rebord supérieur.

Un espace intercalaire est ménagé entre le capot 8 et le bord supérieur de la cuve 1 pour former le conduit 11 d'extraction des granules g.
Dans sa partie centrale 8b, le capot 8 présente une paroi plane obturante, légèrement enfoncée à l'intérieur de la cuve et au travers de laquelle passent la trémie 2 d'alimentation ainsi que l'embout 6 et les conduites d'échappement de l'organe de traitement 7.

### Exemple 1

Un fondant de déneigement obtenu par la mise en oeuvre d'un dispositif selon l'invention comprend 72 % de matières organiques d'origine végétale, biodégradables, et 28 % de sels minéraux alcalins et où alcalino-terreux.

### Exemple 2

Un fondant de déneigement obtenu par la mise en oeuvre d'un dispositif selon l'invention comprend 72 % de matières organiques biodégradables d'origine végétale, et 28 % de sels organiques, tels que par exemple des formiates et/ou acétates de métaux alcalins et/ou alcalino-terreux.

Des exemples de matières végétales appropriées sont donnés ci-après :

### Exemple 3 : Miscanthus (Miscanthus giganteus)

Partie utilisée: Tiges en tronçons/morceaux de 3cm de long. Ils sont broyés finement en poudre, mélangée ensuite avec du chlorure de sodium ou autres sels appropriés au déneigement ainsi qu'avec une substance liante telle que mélasse, vinasse ou autre liant organique qui renforce l'agglomération et/ou la granulation du mélange.

### Exemple 4 : Colza

Partie utilisée: La paille (tige) de colza hachée/broyée finement en poudre, mélangée ensuite avec du chlorure de sodium ou autres sels appropriés au déneigement ainsi qu'avec une substance liante telle que mélasse, vinasse ou autre liant organique qui renforce l'agglomération et/ou la granulation du mélange.

### Exemple 5 : Maïs

Partie utilisée: Les tiges et les feuilles sèches de maïs en tronçons/morceaux de 3 cm de long broyés finement en poudre, mélangée ensuite avec du chlorure de sodium ou autres sels appropriés au déneigement ainsi qu'avec une substance liante telle que mélasse, vinasse ou autre liant organique qui renforce l'agglomération et/ou la granulation du mélange.

### Exemple 6 : Raisin

Partie utilisée: les résidus issus de la récolte et du pressage des grains, tels que grappes, pulpes et restes des pépins de raisin après extraction de l'huile. Ces différents résidus peuvent être utilisés seuls ou en mélange sous forme de compost de marc de raisin. Ils sont broyés, tamisés ou moulus, ensuite séchés jusqu'à un taux de 6% d'humidité, puis mélangés avec du chlorure de sodium ou autres sels appropriés au déneigement, ainsi qu'avec une substance liante telle que mélasse, vinasse ou autre liant organique qui renforce l'agglomération et/ou la granulation du mélange.

## Revendications

1. Dispositif pour le conditionnement sous forme de granules d'une composition de matière formulée à partir de matières premières organiques ou d'un ensemble de matières premières organiques et minérales, **caractérisé en ce qu'il** comprend une cuve rotative (1) à paroi intérieure conformée en entonnoir avec une partie inférieure en pente raide et une partie supérieure évasée recevant les matières premières en vrac en partie supérieure , au moins un jeu de lames (3) assurant le broyage et le mélange desdites matières à l'intérieur de la cuve et au moins une gorge hélicoïdale (10) portée par la dite paroi intérieure de ladite cuve et assurant, conjointement, l'acheminement par centrifugation et le guidage du mélange de la partie inférieure de la cuve (1) vers sa partie supérieure et l'agglomération progressive desdites matières en granules (g).

2. Dispositif selon la revendication 1 **caractérisé en ce que** la dite paroi intérieure présente une courbure continûment variable et présente une forme choisie parmi les hyperboloïdes de révolution et les entonnoirs exponentiels.

3. Dispositif selon la revendication 1 ou 2 **caractérisé en ce qu'il** comprend, en périphérie de sa partie haute, un conduit (11) d'extraction desdites granules (g).

4. Dispositif selon la revendication 3 **caractérisé en ce que** ledit conduit d'extraction (11) est associé à une buse (4) de soufflage d'un flux d'air destiné au séchage desdites granules.

5. Dispositif selon la revendication 4 **caractérisé en ce que** ladite buse (4) est associée à des éléments de chauffage du flux d'air soufflé.

6. Dispositif selon l'une des revendications précédentes **caractérisé en ce que** le jeu de lames (3) est supporté par un arbre rotatif (31) disposé selon l'axe central de la cuve (1).

7. Dispositif selon l'une des revendications précédentes **caractérisé en ce qu'il** comprend, en partie supérieure, un bras de raclage (5) de la paroi interne de la cuve (1).

8. Dispositif selon l'une des revendications précédentes **caractérisé en ce qu'il** comprend deux jeux de lames (3a, 3b) portés respectivement par deux arbres coaxiaux indépendants (31a, 31b) qui sont mus en rotation de sens contraires.

9. Dispositif selon l'une des revendications précédentes **caractérisé en ce qu'il** comprend un embout (6) d'injection dans ladite cuve d'un constituant liquide.

10. Dispositif selon l'une des revendications précédentes **caractérisé en ce qu'il** comprend une trémie supérieure (2) d'alimentation en matières premières.

11. Dispositif selon l'une des revendications précédentes **caractérisé en ce qu'il** comprend un organe (7) de prélèvement et de traitement des gaz d'échappement de la cuve (1).

12. Dispositif selon l'une des revendications précédentes **caractérisé en ce qu'il** comprend un capot (8) épousant, sur son pourtour (8a), le profil du rebord supérieur de la cuve (1) en ménageant un espace intercalaire formant conduit d'extraction (11) des granules (g) et s'engageant, dans sa partie centrale (8b), en saillie à l'intérieur de ladite cuve.

13. Dispositif selon l'une des revendications précédentes **caractérisé en ce qu'il** comprend des moyens de pivotement permettant de faire varier l'angle d'inclinaison de l'axe de rotation de la cuve par rapport à la verticale.

14. Procédé de conditionnement sous forme de granules d'une composition de fondant de déneigement caractérisé en qu'il comprend l'utilisation d'un dispositif selon l'une des revendications précédentes.

15. Procédé selon la revendication 14 **caractérisée en ce que** ladite composition de fondant comprend une partie majoritaire de matières premières biodégradables d'origine végétale et une partie minoritaire de sels choisis parmi les sels organiques et les sels minéraux de métaux alcalins et/ou alcalino-terreux.

16. Procédé selon la revendication 15 **caractérisée en ce que** ladite composition de fondant comprend 71 - 90 % de biomasse et 10 - 29 % desdits sels.

17. Procédé selon la revendication 15 ou 16, **caractérisée en ce que** ladite composition de fondant comprend 4-10% de liant.

18. Procédé selon l'une des revendications 14 à 17, **caractérisé en ce que** ladite matière première d'origine végétale est choisie parmi les tiges de miscanthus, la paille de colza, les tiges et les feuilles sèches de maïs, les résidus issus de la récolte et du pressage des grains de raisin, en particulier grappes, pulpes et les restes de pépins de raisin après extraction de l'huile.
